Europäisches Patentamt

European Patent Office

Office européen des brevets

(11) Veröffentlichungsnummer: **0 636 968 A2**

## (12) EUROPÄISCHE PATENTANMELDUNG

(21) Anmeldenummer: **94111011.6**

(51) Int. Cl.⁶: **G06F 9/44**

(22) Anmeldetag: **14.07.94**

(30) Priorität: **15.07.93 US 91939**

(43) Veröffentlichungstag der Anmeldung:
**01.02.95 Patentblatt 95/05**

(84) Benannte Vertragsstaaten:
**BE DE FR GB IT**

(71) Anmelder: **SIEMENS CORPORATE RESEARCH, INC.**
**755 College Road East**
**Princeton,**
**New Jersey 08540 (US)**

(72) Erfinder: **Gupta,Narendra,Dr.**
**24,Wetherhill Way,**
**Dayton,NJ 08810 (US)**
Erfinder: **Judd,Stephen,Dr.**
**32,Bradford Lane**
**Plainsboro,NJ 08536 (US)**

(74) Vertreter: **Fuchs, Franz-Josef, Dr.-Ing. et al**
**Postfach 22 13 17**
**D-80503 München (DE)**

(54) **Dynamische Programmierung mit Faktorisierung.**

(57) Es wird ein Verfahren der dynamischen Programmierung mittels Faktorisierung offenbart, das die Anwendung der dynamischen Programmierung auf die Lösung von Problemen erlaubt, die bislang als durch dynamische Programmierungen unlösbar erachtet wurden, gewöhnlich wegen unannehmbarem Bedarf an Rechenzeit oder Betriebsmitteln.

In der dynamischen Programmierung erfordert der Lösungsvorgang iterative Erweiterungen der Grenzrelationen durch Vereinigung mit neuen Relationen. Die Erfindung geht von diesem Ansatz aus, indem sie die Grenzrelationen in faktorisierter Form darstellt und dann Rechenverfahren zur Erweiterung dieser Grenzrelationen ausarbeitet, ohne ihre extensionellen Formen tatsächlich zu berechnen. Es wird eine Reihe von Algorithmen zum Erlangen einer solchen Rechenmethodik durch Auffinden von sauberen Faktoren gegebener primitiver Nebenbedingungsrelationen geboten.

FIG 7

EP 0 636 968 A2

ERFINDUNGSGEBIET

Die vorliegende Erfindung betrifft das Gebiet der dynamischen Programmierung als Verfahren zur Optimierung und insbesondere zur Anwendung der dynamischen Programmierung auf die Lösungssuche für Probleme, die bislang wegen der übermäßigen Rechenzeiterfordernisse als unlösbar erachtet worden sind.

HINTERGRUND DER ERFINDUNG

Die (hiernach mit "DP" bezeichnete) dynamische Programmierung ist ein Verfahren zum Lösen von Problemen der Erfüllung von Nebenbedingungen oder der Optimierung. Als solches funktioniert die DP wirksam, wenn das zu lösende Problem gewisse geeignete Strukturen besitzt, beispielsweise wenn das "Netz mit Nebenbedingungen" des Problems ein Baum oder ein "zulässiger Vereinigungsbaum" ist. Viele interessierende Probleme besitzen jedoch keine solchen geeigneten Strukturen und sind bislang als "unzulässig" hinsichtlich einer Lösung durch DP klassifiziert worden, da eine gewaltsame Anwendung des klassischen Verfahrens der dynamischen Programmierung vollkommen unannehmbare Erfordernisse hinsichtlich der Rechenzeit und Betriebsmittel ergibt.

Probleme der Erfüllung von Nebenbedingungen werden oft auf zwei Ebenen beschrieben - einer hohen Ebene (dem "Netz mit Nebenbedingungen") und einer niedrigen Ebene (die Einzelheiten dessen, was die Nebenbedingungen sind, die hiernach als "primitive Relationen" bezeichnet werden). Bei der Aufstellung eines klassischen dynamischen Programms wird die Struktur des Netzes mit Nebenbedingungen ausgenutzt, womit sichergestellt wird, daß die für den schlimmsten Fall benötigten Betriebsmittel sinnvoll sind, ungeachtet der Unhandlichkeit von primitiven Relationen. Die Struktur der hohen Ebene ist stark genug, Zulässigkeit angesichts *jedes* Verhaltens auf niedriger Ebene sicherzustellen. Die primitiven Relationen sind jedoch oft viel weniger bösartig als der schlimmste mögliche Fall, und damit bietet sich eine Gelegenheit, die wir in unserer Erfindung ausnutzen.

Im folgenden offenbaren wir eine Reihe von Algorithmen, die sich zu einem dynamisches Programm für *beliebige* Graphen mit Nebenbedingungen aufbauen. Die Anwendung dieser Algorithmen könnte sich in vielen Anwendungsbereichen sehr bezahlt machen. Leitweglenkung von Fernsprechverbindungen in einem Kommunikationsnetz, Umfigurierung eines Stromverteilungsnetzes, Erstellen von Fahrstraßenplänen in einem Transportsystem, Konfigurieren eines Größensystems aus dem Verzeichnis von Bauteilen zum Erfüllen der Gesamtleistungserfordernisse, und Bildauswertung sind Musterbeispiele.

ZUSAMMENFASSUNG DER ERFINDUNG

Es wird ein neuer DP-Algorithmus offenbart, der in allen Fällen genau so gut wie der klassische DP-Algorithmus läuft und in manchen Fällen in der Lage sein wird, Probleme zu bearbeiten, für die der klassische DP-Algorithmus unzulässig wäre. Dieser neue DP-Algorithmus funktioniert unter der Annahme, daß in manchen Fällen, selbst wenn die DP-Struktur auf hoher Ebene keine Garantie für eine Lösung bietet, die Struktur der niedrigen Ebene gutartig genug ist, zum Erfolg zu führen. Der Anwendungsbereich für unsere Erfindung liegt daher in Rechenproblemen, bei denen das Netz mit Nebenbedingungen nicht die geeignete Struktur eines zulässigen Vereinigungsbaumes besitzt, seine primitiven Relationen jedoch eine Eigenschaft aufweisen, die diesen Mangel kompensiert. Die Eigenschaft ist die Fähigkeit, das dynamische Programm zu "faktorisieren".

KURZBESCHREIBUNG DER ZEICHNUNGEN

FIGUR 1 zeigt ein Beispiel eines Baumgraphen.
FIGUR 2 zeigt ein Beispiel eines Graphen mit einer Linienstruktur und mit einer Bandbreite von 4.
FIGUR 3 zeigt ein Beispiel eines Graphen mit einer Baumstruktur und mit einer Bandbreite von 4.
FIGUR 4 zeigt ein Beispiel eines 2-dimensionalen Graphen mit einer Schenkelbreite von 16.
FIGUR 5 zeigt eine graphische Darstellung der Funktionsweise des Algorithmus *CF2*.
FIGUR 6 zeigt eine graphische Darstellung der Funktionsweise des Algorithmus *ForwardProp*.
FIGUR 7 zeigt eine graphische Darstellung der Funktionsweise eines abgeänderten *ForwardProp*-Algorithmus.

DETAILLIERTE BESCHREIBUNG DER ERFINDUNG

Unsere Erfindung ist auf Probleme der Erfüllung von Nebenbedingungen für diskrete Variablen gerichtet. Als Perspektive für eine detaillierte Besprechung des Verfahrens unserer Erfindung besprechen wir zuerst einige der wesentlichen Eigenschaften der dynamischen Programmierung allgemein. In den folgenden Paragraphen beschreiben wir die Benutzung von "Relationen" zur Darstellung der Nebenbedingungen zwischen einer Menge von Variablen und einiger der Operatoren, mit denen diese Relationen bearbeitet werden. Diese Konzepte werden danach zu einer Beschreibung des "Netzes mit Nebenbedingungen" der hohen Ebene weitergeführt, und es wird das Gesamtrechenproblem formal definiert.

I. Relationen

Eine *Relation R* auf *einem Bereich* $\alpha$ in eine Menge von Wertebereichswerten ist eine Menge von (Tupel genannten) Gesamtfunktionen aus $\alpha$ in den Wertebereich. (Der Einfachheit halber wird hier ein angenommener Wertbereich von $[K] = \{1, 2, 3,..., K\}$ für Darstellungszwecke benutzt). So ist

$$R \subseteq \{f \mid f : \alpha \rightarrow [K]\}$$

Die Menge $\alpha$ ist die Menge von Bereichsvariablen von $R$ und wird mit DOM $(R)$ bezeichnet.

Ein kurzer Hinweis bezüglich der hier benutzten Benennungskonvention: griechische Buchstaben werden zur Benennung der Menge von Bereichsvariablen der Relationen benutzt, großgeschriebene Buchstaben werden zur Benennung der Relationen und kleingeschriebene Buchstaben zur Benennung der Tupel der Relationen benutzt, und $[K]$ wird zur Benennung des Wertebereichs der Bereichsvariablen der Relationen benutzt. Eine Relation, die keinen Tupel besitzt, wird mit *Leerbeziehung* bezeichnet und als ø benannt. Eine Relation mit leerem Bereich wird mit *Nullbeziehung* bezeichnet. Wie Relationen mit nicht leeren Bereichen können unter Umständen in einer Nullbeziehung keine Tupel vorkommen. Eine nicht leere Nullbeziehung kann nur einen Tupel (den Tupel mit Länge 0) besitzen.

II. Operatoren

Der *Projektionsoperator* $\pi$ nimmt zwei Argumente an: eine Relation und einen Bereich. Der Bereich muß eine Untermenge des Bereichs der Relation sein. Wenn $F$ eine Relation und $\beta$ ein Bereich ist, dann gilt

$$\pi_\beta(F) = \{g : \beta \rightarrow [K] \mid \exists f \in F, g = f \mid_\beta\}. \quad (1)$$

Projektion einer Relation auf alle ihre Bereichsvariablen ausgenommen einiger Variablen $\delta$ wird mit $\pi_{-\delta}(S)$ bezeichnet. Dieser Operator wird *project off* genannt.

$$\pi_{-\delta}(S) = \pi_{DOM(s)-\delta}(S)$$

Der *Vereinigungs*-Operator $\bowtie$ nimmt zwei Relationen als Argumente an und erzeugt eine einzige Relation. Wenn $\alpha = DOM(F)$ und $\beta = DOM(g)$ ist, dann gilt

$$F \bowtie G = \{h : \alpha \cup \beta \rightarrow [K] \mid \exists f \in F, g \in G \ni f = h \mid_\alpha, g = h \mid_\beta\} \quad (2)$$

Das Ergebnis eines Vereinigungsoperators besitzt als Bereich die Gesamtmenge der Bereiche seiner Argumente. Vereinigung kommutiert und assoziiert. Wir zeigen eine Menge von Relationen $\{R_1...R_n\}$ durch Kalligraphieschrift, z.B. $\mathcal{R}$, an. Wenn $\mathcal{R} = \{R_1, R_2,...\}$, so schreiben wir

$$\bowtie_{R \in \mathcal{R}} R = R_1 \bowtie R_2 \bowtie ....$$

$$\bowtie_{R \in \mathcal{R}} R$$

kürzen wir mit $\overset{\bowtie}{R}$ ab. Jedesmal wenn $R$ mit den Operatoren $\bowtie$ oder $\pi$ benutzt wird, bedeutet das $\overset{\bowtie}{R}$ . Auch schreiben wir DOM($R$) für

$$\mathrm{DOM}(\underset{R \in \mathcal{R}}{\bowtie} R)\,\mathrm{d.h.}\ \mathrm{DOM}(R_1)\ \cup\ \mathrm{DOM}(R_2)\cup,\ldots$$

Der *Selektions*-Operator $\sigma$ nimmt eine Relation und ein Tupel an und erzeugt eine neue (im allgemeinen kleinere) Relation im selben Bereich.

$$\sigma_a(S) = \{h : \mathrm{DOM}(S) \rightarrow [K] \mid h \in S, h \mid_{\mathrm{DOM}(a)} = a\} \qquad (3)$$

Selektion kommutiert und assoziiert.

III. Netze mit Nebenbedingungen

Ein Problem der Erfüllung von Nebenbedingungen ist ein System von Variablen mit Nebenbedingungen zwischen (d.h. Relationen über) Untermengen der Variablen. Eine abgekürzte (oder "hohe") Beschreibung eines solchen Systems kann durch Betrachtung jeder Variablen als Knoten und jeder Untermenge (d.h. jedes Relationsbereichs) als Kante aufgebaut werden - das ergibt einen Graphen, der *Netz mit Nebenbedingungen* genannt wird. Im Fall, wo die Relationen binär sind (d.h. genau zwei Variablen umfassen), ist das Netz mit Nebenbedingungen ein einfacher ungerichteter Graph, aber in dem allgemeineren Fall, wo manche Relationen mehr als zwei Variablen umfassen, ist das Ergebnis ein Hypergraph.

IV. Das Rechenproblem

Bei dem allgemeinen Problem der Erfüllung von Nebenbedingungen sind vier Ziele gegeben: (K, $\Upsilon$, $\epsilon$, r), wobei
K eine positive Ganzzahl ist, die den Wertbereich [K] = {1, 2, 3,..., K} definiert,
$\Upsilon$ eine Menge von *Knoten* [$\Upsilon_1$, $\Upsilon_2$,...,} ist,
$\epsilon$ eine Menge von (Hyper-)*Kanten* {$\epsilon_1$, $\epsilon_2$, $\epsilon_3$,...} ist,
jede (Hyper-)Kante $\epsilon_i$ der Name der Menge von Knoten

$$\eta(\varepsilon) \subseteq \Upsilon,$$

ist, und
r eine Zuordnung einer Menge von Tupeln zu jeder Kante ist, so daß r($\epsilon$) eine Relation auf dem Bereich $\eta(\epsilon)$ ist. Jede r($\epsilon$) wird als *primitive Relation* bezeichnet.

Die *Riesenvereinigung* dieses Systems von Relationen ist die Vereinigung aller primitiven Relationen

$$\underset{\varepsilon_i \in \mathcal{E}}{\bowtie} \mathrm{r}(\varepsilon_i),$$

die wir der Kürze halber als $\overset{\bowtie}{\mathcal{E}}$ schreiben. Jedes Tupel, das ein Glied dieser Riesenvereinigung ist, wird *Lösung* für das System genannt. Das rechnerische Problem besteht darin, eine Lösung zu finden oder zu beweisen, daß keine existiert. Ein gewaltsamer Ansatz zur Lösung dieses Problems besteht darin, die gegebenen Relationen mit Nebenbedingungen in der Riesenrelation zu vereinigen und dann ein beliebiges Tupel der resultierenden Relation als die Problemlösung herauszugreifen. Das funktioniert zwar im Prinzip, aber da die Größe einer Relation (Anzahl der darin befindlichen Tupel) exponentiell mit der Anzahl von Bereichsvariablen anwächst, ist ein solcher Rechenalgorithmus in vielen Fällen einfach nicht zulässig.

V. Das verbesserte erfindungsgemäße Verfahren

Die klassische dynamische Programmierung wird oft auf Fälle angewandt, in denen die Netze mit Nebenbedingungen Lichtgraphen sind. Man betrachte beispielsweise ein Netz mit Nebenbedingungen ($V$, $E$), wo die Knotenpunkte $V$ = {$v_1$, $v_2$,...,$v_n$} sind und die Kanten nur diejenigen sind, die eine Linie $E$ = {-

4

$(v_1, v_2), (v_1, v_3),..., (V_{n-1}, V_n)\}$ sind. Die klassische dynamische Programmierung beginnt damit, daß sie irgendeine "Grenz-"Beziehung $B_1$ den gesamten Wertebereich von $v_1$, das heißt $[K]$, sein läßt. Dann verbindet sie diese Grenzrelation auf jeder Stufe mit der mit der nächsten Kante im Graphen verbundenen Relation und projiziert auf den nächsten Knotenpunkt:

$$B_i = \pi_{v_i}(B_{i-1} \bowtie \mathrm{r}((v_{i-1}, v_i)))$$

Am Ende des Vorgangs wird die letzte Grenzrelation $B_\eta$ nur dann nicht leer sein, wenn es eine Lösung für das Problem gibt.

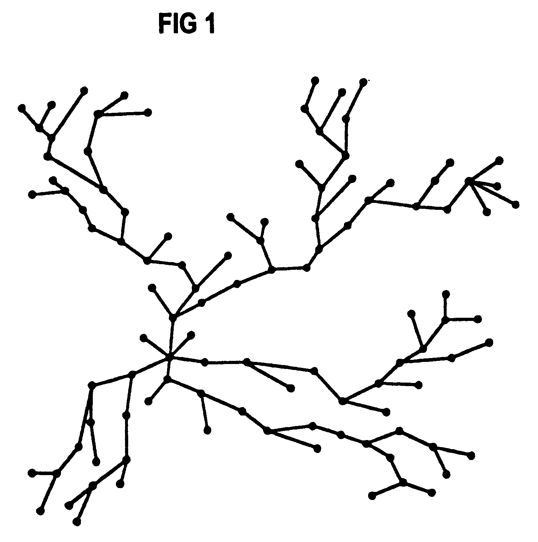

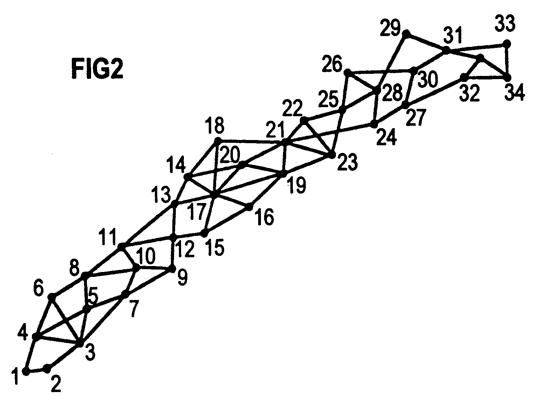

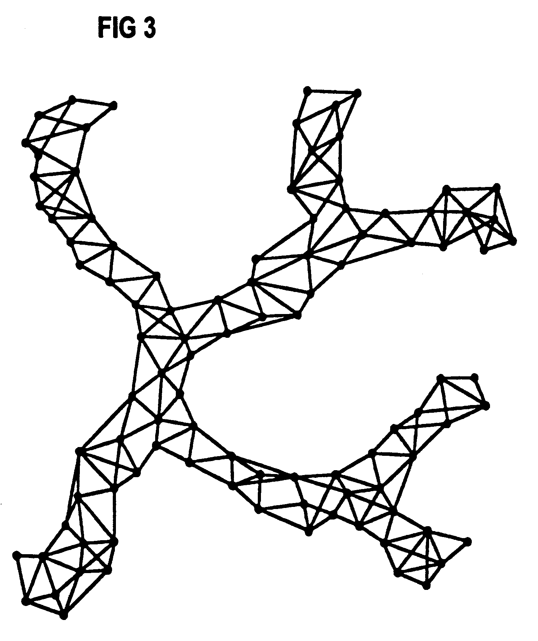

Dieser Vorgang kann so verallgemeinert werden, daß er für allgemeinere Graphen wie (in FIGUR 1 dargestellte) Bäume, bandbreitenbegrenzte Graphen (FIGUR 2) und allgemeiner für schenkelbreiten-begrenzte Graphen (FIGUR 3) funktioniert. Es wird darauf hingewiesen, daß hinsichtlich des Baumgraphenbeispiels der FIGUR 1 der klassische Ansatz für einen derartigen Graphen von Nebenbedingungen darin besteht, an jedem Blatt ein "getrenntes" dynamisches Programm zu beginnen, sich zu einer Zweigstelle hochzuarbeiten, den Schnittpunkt der dort bestehenden Möglichkeiten anzunehmen und dann weiter den Baum hinauf fortzufahren. Die "getrennten" Programme würden als ausgeprägte Faktoren in einem faktorisierten dynamischen Programm erscheinen.

Ehe wir zur Beschreibung der Einzelheiten unserer Verbesserung des Verfahrens der klassischen dynamischen Programmierung übergehen, wird eine Reihe von in dieser Beschreibung benutzten Begriffen definiert:

Die *Bandbreite* eines Graphen mißt den größten Abstand, um den zwei beliebige benachbarte Eckpunkte in einem Graphen voneinander getrennt sein müssen, wenn die Knotenpunkte in einer geraden Linie aneinandergekettet sind. $G$ sei ein Graph mit Knotenpunkten $V(G)$ und Kanten $E(G)$. Die eineindeutige Funktion $\ell: V \rightarrow \{1,2,..., \mid V(G) \mid \}$ sei *layout* von $G$ genannt. Dann besitzt $G$ die Bandbreite $b$, wenn irgendein layout $\ell$ besteht, so daß für alle $(x,y) \in E$, $\mid \ell(x)-\ell(y)\ell \leq b$ ist.

In FIGUR 2 wird ein Beispiel eines Graphen der Bandbreite und ihr Layout dargestellt. Es wird darauf hingewiesen, daß die grobe Struktur des Graphen der FIGUR 2 linienförmig ist, die ohne Erweiterung der Bandbreite unbegrenzt ausgedehnt werden könnte. Wie noch festzustellen ist, ist das Layout für den Graphen durch die Knotenpunktbezeichnungen gegeben. Das Ziel ist hierbei, alle Möglichkeiten an jedem Knotenpunkt über die "Breite" des "Bandes" zu verfolgen. Da dieses Produkt in der Breite exponentiell ist, ist die Lösung des Problems nur dann zulässig, wenn die Breite gering ist.

Die *Schenkelbreite* eines Graphen wird auf folgende Weise definiert: $G$ seiein Graph. Eine *Baumzerlegung* von $G$ ist eine Familie $\chi = \{X = \{X_i: i \in I\}$ von Knotenpunktgruppierungen (Untermengen von $V-(G)$) zusammen mit einem Baum $D$ mit $V(D) = I$, die folgende Eigenschaften besitzen:

- $\cup \{X_i : i \in I\} = V(G)$
- Jede Kante von $G$ befindet sich mit ihren beiden Enden in $X_i$ für einige $i \in I$.
- Für $i,j,k \in I$, wenn j auf dem Weg in $D$ von i zu k liegt, dann gilt $X_i \cap X_k \subseteq X_j$.

Die *Breite* einer Baumzerlegung beträgt maximal $\{ \mid X_i \mid -1 : i \in I\}$. Die *Schenkelbreite* von $G$ ist die Mindestbreite über alle Baumzerlegungen.

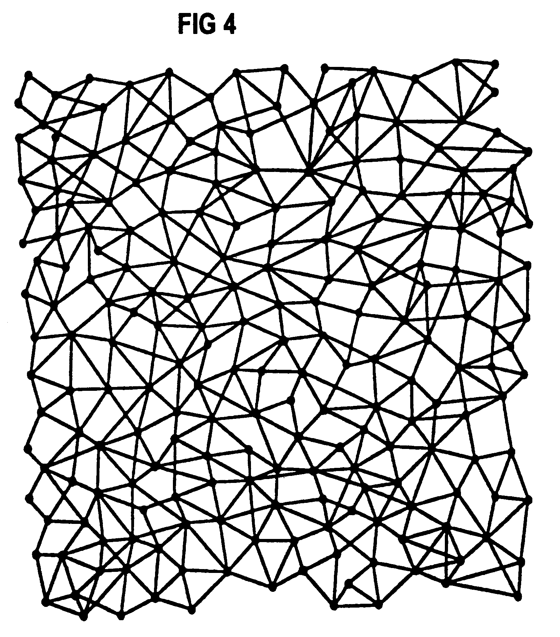

Als Beispiele dieses Konzepts besitzen Bäume und Wälder eine Schenkelbreite $\leq 1$ und seriell-parallele Graphen besitzen Armbreiten $\leq 2$. Bei $n \geq 1$ besitzt der vollständige Graph $K_n$ eine Armbreite $n - 1$ und das rechteckige Gitter $n \times n$ besitzt die Schenkelbreite n. FIGUR 3 zeigt ein Beispiel eines Graphen mit einer Schenkelbreite 4. FIGUR 4 zeigt ein Beispiel eines Graphen mit einer Schenkelbreite 16. Es wird darauf hingewiesen, daß die in FIGUR 3 dargestellte grobe Struktur ein Baum ist, daß jedoch jeder Schenkel in diesem Baum nicht, wie es für einen wahren Baum charakteristisch wäre ein einfacher Liniengraph ist und anstelle dessen eine "fettere" Struktur besitzt. Einzeln genommen ist jeder dieser "fetten" Schenkel ein Graph mit Bandbreite 4.

Die Laufzeit (und der erforderliche Raum) für jedes dieser Probleme ist exponentiell in der Schenkelbreite des Netzes mit Nebenbedingungen, ist jedoch ansonsten *linear* in der Größe des Netzes. Der in FIGUR 4 dargestellte Graph ist ein "2-dimensionaler" Graph mit viel größerer Schenkelbreite als die der Graphen in den anderen Figuren. Dieser Graph stellt Netze mit Nebenbedingungen dar, die für klassische dynamische Programme unzulässig wären aber sich durch das faktorisierte dynamische Programm der Erfindung als lösbar darstellen würden.

Eine Relation $R$ wird ein *Faktor* von $T$ genannt, wenn ein weiterer Faktor $S$ existiert, so daß

$$T = R \bowtie S$$

ist.

Ein Faktor $R$ von $T$ ist ein *sauberer* Faktor, wenn $R = \pi_{\text{DOM(R)}}(T)$. (Wenn eine Relation als das Analog eines "stochastischen Vorgangs" angesehen wird, dann ist der Begriff des "sauberen" Faktors das Analog seiner minimalen Markov-Realisierung.)

Es versteht sich, daß bei der Benutzung des DP-Verfahrens das Gesamtziel darin besteht, zu bestimmen, ob es für ein gegebenes Problem der Erfüllung von Nebenbedingungen Lösungen gibt. Im Verfahren unserer Erfindung ist jedoch ein offenliegendes Ziel die Bestimmung einer Menge von sauberen Faktoren des Problems der Nebenbedingungen. Ihre "Sauberkeit" bedeutet, daß sie genau diejenigen Tupel enthalten, bei denen garantiert ist, daß sie Erweiterungen in einer Lösung des Problems besitzen. Wenn das Problem keine Lösung hat, dann werden die sauberen Faktoren alle leer sein; wenn das Problem Lösungen hat, dann werden alle sauberen Faktoren mindestens ein Tupel besitzen. Die grundlegende Entscheidungsfrage wird daher beantwortet, wenn saubere Faktoren erzeugt werden.

Im folgenden beschreiben wir einen Algorithmus zur Erzeugung von sauberen Faktoren. Die Hauptaufgabe für einen solchen Algorithmus ist die Eindämmung des Wachstums von während des Lösungsvorgangs erzeugten Relationen. Zur Erfüllung dieser Aufgabe durch unsere Erfindung gibt es drei Grundschritte. Der Deutlichkeit halber beschreiben wir diese Schritte nacheinander und setzen sie am Ende in einen einzigen Algorithmus zusammen.

Der erste Schritt besteht in der Projizierung der Relationen auf nur diejenigen Variablen, die weitere Berechnungen beeinflussen. Die Ergebnisse solcher Projektionsoperationen werden die *Grenzrelationen* genannt.

Da die Grenzrelationen unzulässig groß werden können, besteht der nächste Schritt in der Transformierung ihrer extensionalen Form in saubere Faktoren. Ein Algorithmus zur Erzeugung einer solchen Transformation ist unten beschrieben.

Der Lösungsvorgang erfordert iterative Erweiterungen der Grenzrelationen durch Vereinigung mit neuen Relationen. Da Grenzrelationen als saubere Faktoren dargestellt werden, ist ein Algorithmus zum Aufsuchen von sauberen Faktoren mit faktorisierten Grenzrelationen naturgemäß rekursiv. Die (rekursive) Endfassung eines solchen Algorithmus ist ebenfalls unten beschrieben.

Ehe wir zur Beschreibung dieser Schritte im einzelnen fortschreiten, weisen wir darauf hin, daß eine Ähnlichkeit der hier benutzten Definitionen und Begriffsbestimmung mit den in relationalen Datenbanken benutzten einige Verwirrung stiften könnte. Es ist daher wichtig zu bemerken, daß:

- Unsere Knotenmenge $\Upsilon$ die Attribute genannt wird;
- Der Wertebereich $[K]$ der Bereich der Relationen genannt wird;
- Im Gegensatz zu einer Menge von Attributen eine Relation eine Menge von Tupeln ist;
- Der Bereich einer Relation als seine Menge von Attributen bezeichnet wird;
- Die Definition von sauberen Faktoren nicht mit verlustloser Vereinigung zu verwechseln ist;
- Die Menge von Kanten $\epsilon$ die Datenbankauslegung genannt wird; und
- Jede Hyperkante ein Relationsschema genannt wird.

VORWORT ZUR ERFINDUNG:

DYNAMISCHE PROGRAMMIERUNG OHNE FAKTORISIERTE GRENZRELATIONEN

Zur besseren Darstellung des erfindungsgemäßen Verfahrens beschreiben wir als erstes einen Algorithmus der dynamischen Programmierung *CF2* zur Erzeugung von sauberen Faktoren für die Menge primitiver Nebenbedingungsrelationen $\mathcal{E} = \{E_1,..., E_n\}$. In diesem Algorithmus sind Grenzrelationen in extensionaler Form dargestellt. Um die Nützlichkeit der Grenzrelationen besser zu erläutern, beschreiben wir jedoch als erstes einen zwar einfachen, aber rechnungsaufwendigen Algorithmus zur Berechnung von sauberen Faktoren von $\overset{\bowtie}{\mathcal{E}}$. Dieser von uns *CF1* benannte Algorithmus ist:

$$CF1(\mathcal{E})$$

$$\text{return } \{\pi_{\text{DOM(E)}}(\underset{\mathcal{E}}{\bowtie}) \mid E \in \mathcal{E}\}$$

**end.**

Mit *CF1* wird $\overset{\bowtie}{\mathcal{E}}$ berechnet, dessen Größe in der Größe von DOM($\mathcal{E}$) exponentiell ist.

Wir haben daher einen neuen Algorithmus entwikkelt, den wir mit *CF2* bezeichnen und mit dem die Grenzrelationen für die Untermengen von primitiven Relationen schrittweise berechnet werden, anstelle alle primitiven Relationen zu vereinigen. Da die Bereiche der Grenzrelationen viel kleiner als der Bereich von $\overset{\bowtie}{\mathcal{E}}$ sind, ist der Algorithmus *CF2* schneller als *CF1*.

Die Schritte des Algorithmus *CF2* sind:

$$CF2(\mathcal{E}):$$

$$B = \textbf{ForwardProp}(\mathcal{E})$$

$$C = \textbf{BackwardProp}(B)$$

$$D = \textbf{Marginalize}(\mathcal{E}, C)$$

$$\textbf{return}(D)$$

**end.**

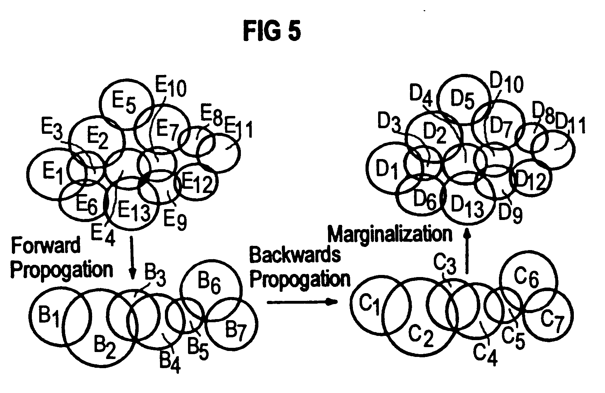

Es ist ersichtlich, daß die drei Schritte im Algorithmus Fortpflanzung nach vorne - *ForwardProp*, Fortpflanzung nach hinten - *BackwardProp* und Marginalisierung - *Marginalize* sind. Diese Schritte sind graphisch in FIGUR 5 dargestellt.

Fortpflanzung nach vorne erzeugt die Folge von Relationen $B = \langle B_1,....B_n \rangle$, so daß

$$\underset{\mathcal{B}_i}{\bowtie} = \underset{\mathcal{E}_i}{\bowtie}$$

und für $1 \le i \le n$,

$$\text{DOM}(B_{i+1}) \cap \text{DOM}(\mathcal{B}_i) \subseteq \text{DOM}(B_i),$$

wobei $B_i = \langle B_1,....B_i \rangle$. Fortpflanzung nach hinten erzeugt $C = \{C_1,...,C_n\}$, so daß $\text{DOM}(C_i) = \text{DOM}(B_i)$ und $C_i$ saubere Faktoren von $\overset{\bowtie}{\mathcal{E}}$. darstellt.

Marginalisierung schließlich erzeugt

$$\mathcal{D} = \{\pi_{\text{DOM(E)}}(\underset{\mathcal{E}}{\bowtie}) \mid E \in \mathcal{E}\},$$

d.h. saubere Faktoren von $\overset{\bowtie}{\mathcal{E}}$ auf primitiven Bereichen.

In den folgenden Abschnitten beschreiben wir die Verfahren zur Entwicklung von *ForwardProp*, *BackwardProp* und *Marginalize* und bestimmen, daß *CF2* saubere Faktoren ergibt.

I. Fortpflanzung nach vorne

Die Schritte des Algorithmus *ForwardProp* sind:

$$\textbf{ForwardProp}(\varepsilon)$$

$$\mathcal{E}^0 = \mathcal{E}$$

$$B_0' = \textbf{Null Relation}$$

$$\textbf{for } 1 \leq i \leq n$$

$$\textbf{choose } E_i \in \mathcal{E}^{i-1}$$

$$B_i = B_{i-1}' \bowtie E_i$$

$$\mathcal{E}^i = \mathcal{E}^{i-1} - \{E_i\}$$

$$\mathcal{E}_i = \mathcal{E} - \mathcal{E}^i$$

$$B_i' = \pi_{DOM(\varepsilon_i) \cap DOM(\varepsilon^i)}(B_i)$$

$$\textbf{end for}$$

$$\textbf{return } < B_1, \ldots, B_n >$$

$$\textbf{end.}$$

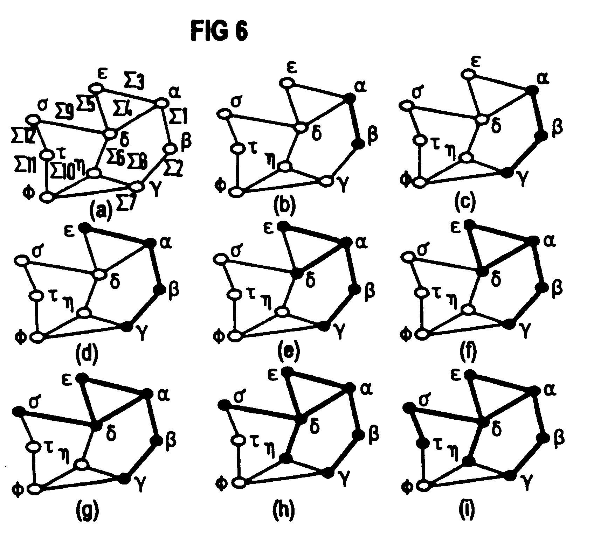

In FIGUR 6a ist graphisch dargestellt, wie die Grenzrelationen durch den Algorithmus *ForwardProp* erzeugt werden. Wie zu sehen ist, zeigt diese Figur den Graphen der Nebenbedingungen und den Bereich der Grenzrelationen für 8 Iterationen. Jeder Knotenpunkt stellt eine (oder eine Menge von) Bereichvariable(n) dar und jede Kante stellt die primitive Nebenbedingungsrelation zwischen ihren Endknoten dar. Am Anfang der ersten Iteration ist die Grenzrelation $B_0'$ eine Nullrelation (Zeile 3 des Algorithmus *ForwardProp*). In der in FIGUR 6b dargestellten ersten Iteration wird für Darstellungszwecke angenommen, daß die Relation $E_1$ gewählt wird. Am Ende dieser Iteration ist, wie durch die starke Linie dargestellt, $\varepsilon_1 = \{E_1\}$ und wie durch die dünnen Linien dargestellt $\mathcal{E}^1 = \{E_2,...,E_{11}\}$,. Die durch Erweiterung der Grenzrelation $B_0'$ (Zeile 6 des Algorithmus *ForwardProp*) erzeugte Relation $B_1$ wird auf dem durch die schwarzen Knotenpunkte gezeigten Bereich

$$\{\alpha, \beta\} = DOM(\mathcal{E}_1) \cap DOM(\mathcal{E}^1)$$

sitzen. In der zweiten Iteration (FIGUR 6c) wird als Beispiel die Relation $E_2$ gewählt. Am Ende dieser Iteration ist $\varepsilon_1 = \{E_1, E_2\}$, und $\mathcal{E}^1 = \{E_3,...,E_{11}\}$. Die erweiterte Grenzrelation $B_2$ wird auf dem Bereich $\{\alpha, \beta, \gamma\}$ (schwarz schattierte Knotenpunkte) sitzen. Am Ende der zweiten Iteration wird, da

$$DOM(\mathcal{E}_2) \cap DOM(\mathcal{E}^2) = \{\alpha, \gamma\}, \beta$$

(grau schattierter Knotenpunkt), von $B_2$ wegprojiziert, um die Grenzrelation $B_2'$ zu erzeugen. Für den Fachmann wird es offensichtlich sein, daß nach Wahl der Relationen $E_3$ und $E_4$ $\epsilon^4$, $\epsilon_4$ und der Bereich von $B_4$ wie in FIGUR 6e gezeigt sein werden und ebenso in den weiteren in FIGUREN 6f-6i dargestellten Schritten. Es wird darauf hingewiesen, daß nach Wahl aller primitiven Relationen der Bereich der erweiterten Grenzrelation derjenige der letztgewählten Relation sein wird.

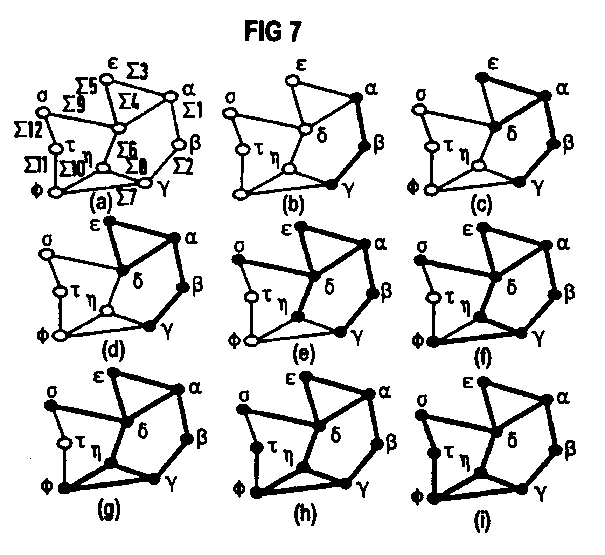

Der *ForwardProp*-Algorithmus erzeugt dieselbe Anzahl erweiterter Grenzrelationen wie die Anzahl an primitiven Relationen, obwohl dies keine notwendige Nebenbedingung ist. Zu dem in FIGUR 6 gezeigten Beispiel ist zu bemerken, daß $B_1$ in $B_2$ einbezogen ist und damit $B_1$ überflüssig wird. Diese Redundanz läßt sich durch eine geringe Abänderung des Algorithmus vermeiden - insbesondere dadurch, daß die Erzeugung der Relation $B_i$ nur dann bewirkt wird, wenn sich der Bereich von $B_{i-1}'$ von $B_{i-1}$ unterscheidet. Die Schritte eines solchen abgeänderten Algorithmus sind in FIGUR 7 dargestellt. Wie ersichtlich ist, werden in diesem Fall nur 8 erweiterte Grenzrelationen erzeugt und keine von diesen ist in einer anderen einbezogen. So wird mit einem solchen abgeänderten Algorithmus die Anzahl erzeugter erweiterter Grenzrelationen geringer als die Anzahl primitiver Relationen sein.

In der Funktion des *ForwardProp*-Algorithmus ist ersichtlich, daß der Schritt der Zeile 6 des Algorithmus die gegenwärtige Grenzrelation und damit ihre Größe erweitert. Durch die Wahl der nächsten primitiven Relation (der Operator *choose* in Zeile 5) wird daher die Laufzeit des Algorithmus stark beeinflußt. Zur Wahl der nächsten primitiven Relation stehen mehrere Strategien zur Verfügung. Beispielsweise kann man die nächste primitive Relation wählen, deren Bereich den größten Schnitt mit der gegenwärtigen Grenzrelation aufweist oder maximal im Bereich der gegenwärtigen Grenzrelation enthalten ist. Dem Fachmann werden andere solche Strategien bekannt sein.

## II. Fortpflanzung nach hinten

Die Schritte des Algorithmus *BackwardProp* sind:

$$\textbf{BackwardProp}(< B_1, \ldots, B_n >):$$
$$C_n = B_n$$
$$\text{for } n - 1 \geq i \geq 1$$
$$C_i = \pi_{DOM(B_i)}(C_{i+1} \bowtie B_i)$$
$$\text{end for}$$
$$\text{return} < C_1, \ldots, C_n >$$
$$\text{end.}$$

## III. Marginalisierung

Die Schritte des Algorithmus *Marginalize* sind:

$$\textbf{Marginalize}(\epsilon, C)$$
$$\forall E_i \in \mathcal{E} \text{ do}$$

$$\textbf{choose} \quad C_j \in C \text{ such that } \text{DOM}(E_i) \subseteq \text{DOM}(C_j)$$

$$D_i = \pi_{DOM(E_i)}(C_j)$$

$$\textbf{end do}$$

$$\textbf{return } \{D_i\}$$

$$\textbf{end.}$$

Aus diesen drei Algorithmusbestandteilen des Algorithmus *CF2* zusammen mit den angegebenen Nebenbedingungen wird es dem Fachmann offenbar sein, daß, eine Menge von Nebenbedingungsrelationen $\epsilon = \{E_1,...,E_n\}$ vorausgesetzt, der Algorithmus *CF2* die Menge von Relationen $\{D_1,...,D_n\}$ ergibt, die saubere Faktoren von $\overset{\bowtie}{\mathcal{E}}$ sind, so daß DOM($D_i$) = DOM($E_i$).

BEVORZUGTE AUSFÜHRUNGSFORM DER ERFINDUNG:

DYNAMISCHE PROGRAMMIERUNG MIT FAKTORISIERTEN GRENZRELATIONEN

Im vorangegangenen Abschnitt beschrieben wir den Algorithmus *CF2*, in dem erweiterte Grenzrelationen $B_i$ in extensionaler Form bewahrt werden. Die Komplexität dieses Algorithmus ist daher exponentiell in der Größe des Bereichs seiner Relationen, und dies kann ziemlich groß sein. Wie beispielsweise aus dem in FIGUR 7 dargestellten Problem ersichtlich, besitzt die größte erweiterte Grenzrelation 4 von den 8 Bereichsvariablen des Problems der Erfüllung der Nebenbedingungen. Wir beschreiben hier zwei zusätzliche Algorithmen, die wir mit *CF3* und *CF4* bezeichnen und die die Grenzrelationen in faktorisierter Form darstellen und damit die Komplexität der Berechnung sauberer Faktoren reduzieren. Diese Ausführungsform der Erfindung wird von uns als faktorisierte dynamische Programmierung (ab und zu als "fDP" abgekürzt) bezeichnet.

Für die Zwecke dieser Offenbarung setzen wir das Vorhandensein eines leicht handzuhabenden Algorithmus *Faktor(B)* zur Erzeugung von sauberen Faktoren einer Relation *B* voraus. Ein Algorithmus zur Erzeugung solcher Faktoren wird von den Erfindern in einer neueren Arbeit beschrieben: S. Judd und N. Gupta, *On Factorization of Extensional Form of Relations On Discrete Domains* (Über die Faktorisierung einer extensionalen Form von Relationen auf diskreten Bereichen), Technical Report SCR-93-TR-401, Siemens Corporate Research, Inc., der die Grundlage für eine im wesentlichen gleichzeitig eingereichte Patentanmeldung bilden soll. Wir beschäftigen uns hier nur damit, daß solche Faktoren existieren, und was man mit ihnen anfangen soll.

Da die faktorisierte Form einer Relation eine Menge von Relationen ist, bezeichnen wir die faktorisierte Form einer erweiterten Grenzrelation $B_i$ mit $\mathcal{F}_i = \{F_1,...,F_m\}$.

Nach der Definition sauberer Faktoren bedeutet dies, daß

$$B_i = \underset{\mathcal{F}_i}{\bowtie} \text{ und } F_j = \pi_{DOM(F_j)}(B_i).$$

$\mathcal{F}_i$ vorausgesetzt erfordert die Berechnung von $\mathcal{F}_{i+1}$ :
- a) einen ersten Operator, den wir den *FProject*-Operator benennen, der $\mathcal{F}_i$ annimmt und es auf

$$\text{DOM}(\mathcal{E}_i) \cap \text{DOM}(\mathcal{E}^i)$$

projiziert, um $\mathcal{F}_i'$, die faktorisierte Form von $B_i'$ (aus Zeile 9 des *ForwardProp*-Algorithmus) zu erzeugen, und
- einen zweiten Operator, den wir den *CF*-Operator nennen, der saubere Faktoren von

$$\mathcal{F}_i' \cup \{E_{i+1}\}$$

(aus Zeile 6 des *ForwardProp*-Algorithmus) erzeugt.

Es ist zu bemerken, daß für den *CF*-Operator einer der beiden in Verbindung mit der ersten Ausführungsform der Erfindung offenbarten Algorithmen *CF1*, *CF2* aufgerufen werden kann, oder der neue Algorithmus sich rekursiv selbst aufrufen kann. Unser Hauptaugenmerk wird daher auf der Entwicklung des *FProject*-Operators liegen. Danach werden wir den Algorithmus *CF3* beschreiben, der den Algorithmus *CF2* aufruft, und den Algorithmus *CF4*, der sich rekursiv selbst und den Algorithmus *CF1* aufruft.

I. Projektionsoperator für faktorisierte Relationen

Der *FProject*-Algorithmus teilt $T$ in zwei disjunkte Untermengen $T_1 = \{T_1,...,T_i\}$ und $T_2 = \{T_{i+1},...,T_n\}$ ein, so daß die Bereiche von Gliedern von $T_1$ allein die Menge $\delta$ schneiden (Zeile 2 des *FProject*-Algorithmus). Es versteht sich daher, daß Glieder der Menge $T_2$ als saubere Faktoren von $\pi_{-\delta}(T)$ verbleiben. Unter gewissen Bedingungen, die durch die Operation der Zeile 5 bis 10 des *FProject*-Algorithmus geprüft werden, könnte $\delta$ von einzelnen Gliedern von $T_1$ reprojiziert werden, um saubere Faktoren von $\pi_{-\delta}(T)$ zu ergeben. Wenn diese Bedingungen nicht erfüllt werden, projiziert die Operation auf Zeile 11 des *FProject*-Algorithmus $\delta$ ab, um die Vereinigung aller Glieder von $T_1$ zu bilden, und faktorisiert das Ergebnis in saubere Faktoren.

Die Schritte des *FProject*-Algorithmus bestehen aus:

$$FProject(\gamma,\ \mathcal{T})$$

$$\delta = \mathrm{DOM}(\mathcal{T}) - \gamma$$

$$\mathcal{T}_1 = \{T \in \mathcal{T} \mid \mathrm{DOM}(T) \cap \delta \neq \varnothing\}$$

$$\texttt{if}\ \ (\mathcal{T}_1 \neq \varnothing)\ \ \texttt{then}$$

$$\mathcal{T}_2 = \mathcal{T} - \mathcal{T}_1$$

$$\text{if } \forall T_1, T_2 \in \mathcal{T}_1, T_1 \neq T_2$$

$$\forall b_1, b_2 \in \pi_{DOM(T_1) \cap DOM(T_2)}\ T_1$$

$$\text{such that} \quad \pi_{-s}(b_1) = \pi_{-s}(b_2)$$

$$\pi_{DOM(T_1)-DOM(T_2)}(\sigma_{b_1}(T_1)) = \pi_{DOM(T_1)-DOM(T_2)}(\sigma_{b_2}(T_1))$$

and

$$\pi_{DOM(T_2)-DOM(T_1)}(\sigma_{b_1}(T_2)) = \pi_{DOM(T_2)-DOM(T_1)}(\sigma_{b_2}(T_2))$$

$$\text{then} \quad \mathcal{T}_1 = \{T \mid \exists T_1 \in \mathcal{T}_1, T = \pi_{-s}(T_1)\}$$

$$\text{else} \quad \mathcal{T}_1 = Factor(\pi_{-s} \underset{\mathcal{T}_1}{\bowtie}))$$

```
        end if
        return   𝒯₁ ∪ 𝒯₂
    else return   𝒯
    end if
end.
```

## II. Nichtrekursives dynamisches Programm

Die Schritte des *CF3*-Algorithmus umfassen:

$$CF3(\mathcal{E})$$

$$F = FForwardProp(\epsilon)$$

$$G = FBackwardProp(F)$$

$$D = FMarginalize(\epsilon, G)$$

$$return(D)$$

$$end.$$

Die Schritte des *FForwardProp*-Algorithmus sind:

$$FForwardProp(\mathcal{E})$$

$$\mathcal{E}^0 = \mathcal{E}$$

$$\mathcal{F}_0' = \{\text{Null Relation}\}$$

$$\text{for } 1 \leq i \leq n$$

$$\text{choose } E_i \in \mathcal{E}^{i-1}$$

$$\mathcal{F}_i = CF2\,(\mathcal{F}_{i-1}' \cup \{E_i\})$$

$$\mathcal{E}^i = \mathcal{E}^{i-1} - \{E_i\}$$

$$\mathcal{E}_i = \mathcal{E} - \mathcal{E}^i$$

$$\mathcal{F}_i' = FProject\,(\text{DOM}(\mathcal{E}_i) \cap \text{DOM}(\mathcal{E}^i),\ \mathcal{F}_i)$$

$$\text{end for}$$

$$\text{return } \langle F_1, \ldots, F_n \rangle$$

$$\text{end.}$$

Die Schritte des *FBackwardProp*-Algorithmus sind:

$$FBackwardProp(\langle F_1, \ldots, F_n \rangle)$$

$$G_n = F_n$$

$$\text{for } n - 1 \geq i \geq 1$$

$$G_i = FProject(\text{DOM}(\mathcal{F}_i),\ CF2(G_{i-1} \cup \mathcal{F}_i))$$

$$\text{end for}$$

$$\text{return } \langle G_1, \ldots, G_n \rangle$$

$$\text{end.}$$

Die Schritte des *FMarginalize*-Algorithmus sind:

$$FMarginalize(\mathcal{E}, G)$$

$$\forall E_i \in \mathcal{E} \text{ do}$$

$$\text{choose } G_j \in G \text{ such that } \text{DOM}(E_i) \subseteq \text{DOM}(G_j)$$

$$D_i = \pi_{DOM(E_i)}(\underset{G_j}{\bowtie})$$

$$\text{end do}$$

$$\text{return } \{D_i\}$$

$$\text{end.}$$

### III. Rekursives dynamisches Programm

Der oben beschriebene Algorithmus *FForwardProp* ruft den Algorithmus *CF2* auf, um saubere Faktoren der Grenzrelation zu finden. Diese Grenze kann ziemlich groß sein, aber solange wie die Faktoren klein sind wird die Lösung dieses Unterproblems zulässig sein. Es ist jedoch zu bemerken, daß das Unterproblem dem ursprünglichen Problem formal gleich ist, so daß wir den Algorithmus *CF4* auch zur Lösung des Unterproblems benutzen können. Die Schritte des *CF4*-Algorithmus sind:

$$CF4(\mathcal{E})$$

$$F = FForwardProp(\mathcal{E})$$

$$G = FBackwardProp(F)$$

$$D = FMarginalize(\mathcal{E}, G)$$

$$\text{return}(D)$$

$$\text{end.}$$

Die Schritte des *RForwardProp*-Algorithmus sind:

*RForwardProp* ( $\epsilon$ )

$$\mathcal{E}^\circ = \mathcal{E}$$

$$\mathcal{F}_{\circ}' = \{\text{Null Relation}\}$$

**for** $1 \leq i \leq n$

**choose** $E_i \in \mathcal{E}^{i-1}$

**if** $\text{DOM}(\mathcal{F}_{i-1}' \cup \{E_i\}) = \text{DOM}(\mathcal{E}))$

**then** $\mathcal{F}_i = CF2(\mathcal{F}_{i-1}' \cup \{E_i\})$

**else** $\mathcal{F}_i = CF4(\mathcal{F}_{i-1}' \cup \{E_i\}$

$$\mathcal{E}^i = \mathcal{E}^{i-1} - \{E_i\}$$

$$\mathcal{E}_i = \mathcal{E} - \mathcal{E}^i$$

$$\mathcal{F}_i' = FProject(\text{DOM}(\mathcal{E}_i) \cap \text{DOM}(\mathcal{E}^i), \mathcal{F}_i )$$

**end for**

**return** $< \mathcal{F}_1,...,\mathcal{F}_n >$

**end.**

Wie ersichtlich, gibt es in dieser Routine eine zusätzliche Zeile, die prüft, ob der rekursiv hervorgerufene Aufruf tatsächlich an einer kleineren Instanz operiert als der, an der der Aufrufer arbeitet. Wenn nicht, dann würde er sich unendlich wiederholen, und dies vermeiden wir, indem wir *CF2* aufrufen. Bei Eintreten einer solchen Situation ist die "Grenze" zum ganzen Problem degeneriert. Da sich *CF4* stets selbst mit immer kleineren $\epsilon$ aufruft, wird dies immer der Grundfall für die Rekursion sein.

Der Fachmann wird verstehen, daß ein dynamisches Programm Inkrementalrechnung und Darstellung der Grenzrelationen erfordert. Da die Größe der Grenzrelationen exponentiell anwachsen kann, besteht ein Weg zur Beschleunigung der Rechnung in der Darstellung der Grenzrelationen in faktorisierter Form und der Ausarbeitung von Rechenverfahren zu ihrer Erweiterung ohne Berechnung ihrer extensionalen Formen.

Wir haben neue dynamische Programme in ihren Ausführungsformen in den Algorithmen *CF2*, *CF3* und *CF4* zum Bestimmen von sauberen Faktoren der gegebenen primitiven Nebenbedingungsrelationen offenbart und beschrieben. Unter der Voraussetzung eines beliebigen Netzes mit Nebenbedingungen und einer beliebigen Strategie zur Auswahl der nächsten primitiven Relation zur Erweiterung der Grenze werden mit dem klassischen dynamischen Programmierungsalgorithmus *CF2* die korrekten sauberen Faktoren garantiert. Der faktorisierte dynamische Programmierungsalgorithmus *CF3* ist jedoch wirkungsvoller als *CF2*, indem er die Grenzrelationen in faktorisierter Form darstellt.

Man hat festgestellt daß bei faktorisierten Grenzrelationen das Problem der Erweiterung der Grenze und der Suche nach sauberen Faktoren dafür rekursiven Charakters ist. Anstatt zu kursieren, benutzt der Algorithmus *CF3* den Algorithmus *CF2* zur Erweiterung der faktorisierten Grenze. Es wird daher erwartet, daß der Algorithmus *CF4*, der rekursiv funktioniert, wirkungsvoller als der Algorithmus *CF3* ist.

Obwohl die vorliegenden Ausführungsformen der Erfindung im einzelnen beschrieben worden sind, daß darin verschiedene Änderungen und Substitutionen ausgeführt werden können, ohne von dem durch die beiliegenden Ansprüche definierten Sinn und Umfang der Erfindung abzuweichen.

**Patentansprüche**

1. Verfahren zur Anwendung der dynamischen Programmierung auf die Lösung von Problemen zur Erfüllung von Nebenbedingungen, wobei die Verbesserung folgende Schritte umfaßt:
   Projizieren von Relationen eines Bereichs des besagten Problems zur Erfüllung von Nebenbedingungen auf nur eine Menge von Variablen des besagten Optimierungsproblems, die weitere Berechnungen beeinflussen, wobei die Ergebnisse der besagten Projizierung Grenzrelationen darstellen; und
   Darstellen der extensionellen Form der besagten Grenzrelationen als eine Menge sauberer Faktoren.

2. Das verbesserte dynamische Programmierungsverfahren nach Anspruch 1, wobei die besagte Menge von sauberen Faktoren, die die besagten Grenzrelationen darstellen, durch einen Algorithmus *CF3* bestimmt wird, wobei der besagte Algorithmus *CF3* folgende Schritte umfaßt:

$$CF3(\mathcal{E})$$

$$F = \textbf{FForwardProp}(\mathcal{E})$$

$$G = \textbf{FBackwardProp}(F)$$

$$D = \textbf{FMarginalize}(\mathcal{E},G)$$

$$\textbf{return}(D)$$

$$\textbf{end.}$$

3. Das verbesserte dynamische Prorammierungsverfahren nach Anspruch 2, wobei der besagte Schritt *FForwardProp* des besagten Algorithmus *CF3* selbst durch einen Algorithmus mit folgenden Schritten definiert ist:

$$\textbf{FForwardProp}(\mathcal{E})$$

$$\mathcal{E}^0 = \mathcal{E}$$

$$\mathcal{F}_0{}' = \{\textbf{Null Relation}\}$$

$$\textbf{for } 1 \leq i \leq n$$

$$\text{choose } E_i \in \mathcal{E}^{i-1}$$

$$\mathcal{F}_i = CF2(\mathcal{F}_{i-1}' \cup \{E_i\})$$

$$\mathcal{E}^i = \mathcal{E}^{i-1} - \{E^i\}$$

$$\mathcal{E}_i = \mathcal{E} - \mathcal{E}^i$$

$$\mathcal{F}_i' = FProject\ (\text{DOM}(\mathcal{E}_i) \cap \text{DOM}(\mathcal{E}^i),\ \mathcal{F}_i)$$

```
end for
return <F_1,...,F_n>
end.
```

4. Das verbesserte dynamische Programmierungsverfahren nach Anspruch 2, wobei der besagte Schritt *FBackwardProp* des besagten Algorithmus *CF3* selbst durch einen Algorithmus mit folgenden Schritten definiert ist:

$$\textbf{FBackwardProp}(<F_1,...,F_n>)$$

$$\mathcal{G}_n = \mathcal{F}_n$$

$$\textbf{for } n - 1 \geq i \geq 1$$

$$\mathcal{G}_i = FProject(\text{DOM}(\mathcal{F}_i),\ CF2(\mathcal{G}_{i-1} \cup \mathcal{F}_i))$$

```
end for
return < G_1,...,G_n >
end.
```

5. Das verbesserte dynamische Programmierungsverfahren nach Anspruch 2, wobei der besagte Schritt *FMarginalize* des besagten Algorithmus *CF3* selbst durch einen Algorithmus mit folgenden Schritten definiert ist:

$$\textbf{FMarginalize}(\mathcal{E}, \mathcal{G})$$

$$\forall E_i \in \mathcal{E} \text{ do}$$

$$\text{choose} \quad G_i \in G \quad \text{such that} \quad \text{DOM}(E_i) \subseteq \text{DOM}(G_j)$$

$$D_i = \pi_{\text{DOM}(E_i)}\left(\underset{G_j}{\bowtie}\right)$$

**end do**

**return** $\{D_j\}$

**end.**

6. Das verbesserte dynamische Programmierungsverfahren nach Anspruch 3, wobei die besagte Funktion *FProject* des besagten Algorithmus *FForwardProp* selbst durch einen Algorithmus mit folgenden Schritten definiert ist:

$$FProject(\gamma, T)$$

$$\delta = \text{DOM}(T) - \gamma$$

$$T_1 = \{T \in T \mid \text{DOM}(T) \cap \delta \neq \emptyset\}$$

$$\text{if} \ (T_1 \neq \emptyset) \ \text{then}$$

$$T_2 = T - T_1$$

$$\text{if} \ \forall T_1, T_2 \in T_1, T_1 \neq T_2$$

$$\forall b_1, b_2 \in \pi_{DOM(T_1) \cap DOM(T_2)} T_1$$

$$\text{such that} \ \pi_{\delta}(b_1) = \pi_{\delta}(b_2)$$

$$\pi_{DOM(T_1) - DOM(T_2)}(\sigma_{b_1}(T_1)) = \pi_{DOM(T_1) - DOM(T_2)}(\sigma_{b_2}(T_1))$$

$$\text{and}$$

$$\pi_{DOM(T_2) - DOM(T_1)}(\sigma_{b_1}(T_2)) = \pi_{DOM(T_2) - DOM(T_1)}(\sigma_{b_2}(T_2))$$

$$\text{then} \ T_1 = \{T \mid \exists T_1 \in T_1, T = \pi_{\delta}(T_1)\}$$

18

$$\text{else} \quad T_1 = Factor(\pi_{\delta} \underset{T_1}{\bowtie}))$$

$$\text{end if}$$

$$\text{return} \quad T_1 \cup T_2$$

$$\text{else return} \quad T$$

$$\text{end if}$$

$$\text{end.}$$

**7.** Das verbesserte dynamische Programmierungsverfahren nach Anspruch 4, wobei die besagte Funktion *FProject* des besagten Algorithmus *FBackwardProp* selbst durch einen Algorithmus mit folgenden Schritten definiert ist:

$$FProject(\gamma, T)$$

$$\delta = \text{DOM}(T) - \gamma$$

$$T_1 = \{T \in T \mid \text{DOM}(T) \cap \delta \neq \emptyset\}$$

$$\text{if} \quad (T_1 \neq \emptyset) \quad \text{then}$$

$$T_2 = T - T_1$$

$$\text{if} \quad \forall T_1, T_2 \in T_1, T_1 \neq T_2$$

$$\forall b_1, b_2 \in \pi_{DOM(T_1) \cap DOM(T_2)} T_1$$

$$\text{such that} : \pi_{\delta}(b_1) = \pi_{\delta}(b_2)$$

$$\pi_{DOM(T_1) - DOM(T_2)} (\sigma_{b_1}(T_1)) = \pi_{DOM(T_1) - DOM(T_2)} (\sigma_{b_2}(T_1))$$

$$\text{and}$$

$$\pi_{DOM(T_2) - DOM(T_1)} (\sigma_{b_1}(T_2)) = \pi_{DOM(T_2) - DOM(T_1)} (\sigma_{b_2}(T_2))$$

$$\text{then} \quad T_1 = \{T \mid \exists T_1 \in T_1, T = \pi_{\delta}(T_1)\}$$

$$\textbf{else} \quad T_1 = Factor(\pi_{\mathcal{I}} \underset{T_1}{\bowtie}))$$

```
end if

return  T₁ ∪ T₂

else return  T

end if
end.
```

8. Das verbesserte dynamische Programmierungsverfahren nach Anspruch 1 mit dem weiteren Schritt der Vereinigung neuer Relationen mit den besagten Grenzrelationen durch iterative Erweiterungen der besagten Grenzrelationen, und wobei der besagte iterative Vereinigungsschritt durch einen Algorithmus CF4 bewirkt wird, wobei der besagte Algorithmus CF4 folgende Schritte umfaßt:

$$CF4(\mathcal{E})$$

```
F = FForwardProp(Є)

G = FBackwardProp(F)

D = FMarginalize(Є,G)

return(D)
end.
```

9. Das verbesserte dynamische Programmierungsverfahren nach Anspruch 8, wobei der besagte Schritt RForwardProp des besagten Algorithmus CF4 selbst durch einen Algorithmus mit folgenden Schritten definiert ist:

$$FForwardProp(\mathcal{E})$$

$$\mathcal{E}^\circ = \mathcal{E} \quad = \{\text{Null Relation}\}$$

$$\textbf{for } 1 \le i \le n$$

$$\textbf{choose } E_i \in \mathcal{E}^{i-1}$$

$$\text{if } \mathrm{DOM}(\mathcal{F}_{i\text{-}1}' \cup \{E_i\}) = \mathrm{DOM}(\mathcal{E}))$$

$$\text{then } \mathcal{F}_i = CF2(\mathcal{F}_{i\text{-}1}' \cup \{E_i\})$$

$$\text{else } \mathcal{F}_i = CF4(\mathcal{F}_{i\text{-}1}' \cup \{E_i\}$$

$$\mathcal{E}^i = \mathcal{E}^{i\text{-}1} - \{E_i\}$$

$$\mathcal{E}_i = \mathcal{E} - \mathcal{E}^i$$

$$\mathcal{F}_i' = FProject\,(\mathrm{DOM}(\mathcal{E}_i) \cap \mathrm{DOM}(\mathcal{E}^i), \mathcal{F}_i)$$

$$\text{end for}$$

$$\text{return } < \mathcal{F}_1,...,\mathcal{F}_n >$$

$$\text{end.}$$

**10.** Das verbesserte dynamische Programmierungsverfahren nach Anspruch 8, wobei der besagte Schritt *FBackwardProp* des besagten Algorithmus *CF4* selbst durch einen Algorithmus mit folgenden Schritten definiert ist:

$$FBackwardProp(<\mathcal{F}_1,...,\mathcal{F}_n>)$$

$$\mathcal{G}_n = \mathcal{F}_n$$

$$\text{for } n - 1 \geq i \geq 1$$

$$\mathcal{G}_i = FProject\,(\mathrm{DOM}(\mathcal{F}_i), CF2\,(\mathcal{G}_{i\text{-}1} \cup \mathcal{F}_i))$$

$$\text{end for}$$

$$\text{return } < \mathcal{G}_1,...,\mathcal{G}_n >$$

$$\text{end.}$$

**11.** Das verbesserte dynamische Programmierungsverfahren nach Anspruch 8, wobei der besagte Schritt *FMarginalize* des besagten Algorithmus *CF4* selbst durch einen Algorithmus mit folgenden Schritten

definiert ist:

$$FMarginalize(\mathcal{E},\ \mathcal{G})$$

$$\forall E_i \in \mathcal{E} \text{ do}$$

$$\text{choose } \mathcal{G}_i \in \mathcal{G} \text{ such that } \text{DOM }(E_i) \subseteq \text{DOM }(\mathcal{G}_j)$$

$$D_i = \pi_{DOM(E_i)} \left( \underset{\mathcal{G}_j}{\bowtie} \right)$$

$$\text{end do}$$
$$\text{return } \{D_i\}$$
$$\text{end.}$$

12. Das verbesserte dynamische Programmierungsverfahren nach Anspruch 9, wobei die besagte Funktion *FProject* des besagten Algorithmus *RForwardProp* selbst durch einen Algorithmus mit folgenden Schritten definiert ist:

$$FProject(\gamma,\ \mathcal{T})$$

$$\delta = \text{DOM}(\mathcal{T}) - \gamma$$

$$\mathcal{T}_1 = \{T \in \mathcal{T} \mid \text{DOM}(T) \cap \delta \neq \varnothing\}$$

$$\text{if } (\mathcal{T}_1 \neq \varnothing) \text{ then}$$

$$\mathcal{T}_2 = \mathcal{T} - \mathcal{T}_1$$

$$\text{if } \forall T_1, T_2 \in \mathcal{T}_1, T_1 \neq T_2$$

$$\forall b_1, b_2 \in \pi_{DOM(T_1) \cap DOM(T_2)}\ T_1$$

such that $\pi_{\mathcal{J}}(b_1) = \pi_{\mathcal{J}}(b_2)$

$$\pi_{DOM(T_1)-DOM(T_2)} \left(\sigma_{b_1}(T_1)\right) = \pi_{DOM(T_1)-DOM(T_2)} \left(\sigma_{b_2}(T_1)\right)$$

and

$$\pi_{DOM(T_2)-DOM(T_1)} \left(\sigma_{b_1}(T_2)\right) = \pi_{DOM(T_2)-DOM(T_1)} \left(\sigma_{b_2}(T_2)\right)$$

then $\mathcal{T}_1 = \{T \mid \exists T_1 \in \mathcal{T}_1, T = \pi_{\mathcal{J}}(T_1)\}$

else : $\mathcal{T}_1 = Factor(\pi_{\mathcal{J}} \underset{\mathcal{T}_1}{\bowtie}))$

**end if**

**return** $\mathcal{T}_1 \cup \mathcal{T}_2$

**end if**

**end.**

FIG 1

FIG2

## FIG 3

## FIG 4

# FIG 5

# FIG 6

# FIG 7